# EUROPÄISCHE PATENTANMELDUNG

(11) **EP 4 725 589 A1**
(43) Veröffentlichungstag der Anmeldung: **15.04.2026**
(21) Anmeldenummer: 25207591.6
(22) Anmeldetag: 08.10.2025
(51) Int. Cl.: B01D 61/58, C12H 3/04, A23L 2/08

(54) **VERFAHREN UND VORRICHTUNG ZUM ENTALKOHOLISIEREN**

(30) Priorität: 09.10.2024 DE 102024129202
(71) Anmelder: Bucher Denwel GmbH, 84416 Taufkirchen (Vils) (DE)
(72) Erfinder: Banke, Friedrich, 85570 Markt Schwaben (DE); von Terzi, Korbinian, 81541 München (DE)
(74) Vertreter: Schlimme, Wolfram

(57) **Zusammenfassung**

Ein zweistufiges Membrantrennverfahren zum Entalkoholisieren einer Wasser und Alkohol, insbesondere Ethanol, sowie Aromastoffe und/oder Nährstoffe enthaltenden Ausgangsflüssigkeit (F) mit einer ersten Verfahrensstufe mit einer zumindest eine Trennmembran (12) aufweisenden ersten Membrantrenneinheit (1) und mit einer der ersten Verfahrensstufe nachgeordneten zweiten Verfahrensstufe mit einer eine Pervaporationseinheit (20) mit zumindest einer Pervaporationsmembran (22) aufweisenden zweiten Membrantrenneinheit (2) aufweist, zeichnet sich dadurch aus, dass die Ausgangsflüssigkeit (F) unter Überdruck in einen primärseitigen Raum (13) der ersten Membrantrenneinheit (1) eingeleitet wird, in deren der zumindest einen Trennmembran (12) nachgeordneten sekundärseitigem Raum (14) ein niedrigerer Druck vorherrscht als im primärseitigen Raum (13), wobei Wasser und Alkohol als ein alkoholhaltiges flüssiges Permeat (P1) durch die zumindest eine Trennmembran (12) in den sekundärseitigen Raum (14) hindurchtreten und wobei einem von der zumindest einen Trennmembran (12) im primärseitigen Raum (13) zurückgehaltenen Retentat (R1) Wasser oder eine Wasser enthaltende Flüssigkeit als Verdünnungsflüssigkeit (V) mittelbar oder unmittelbar hinzugeführt wird, dass das alkoholhaltige flüssige Permeat (P1) in der Pervaporationseinheit (20) der zweiten Membrantrenneinheit (2) nachbehandelt wird, wobei das alkoholhaltige flüssige Permeat (P1) zunächst in den primärseitigen Raum (23) der Pervaporationseinheit (20) eingeleitet wird, wo der Alkohol in zumindest einer Pervaporationsmembran (22) verdampft und als alkoholhaltiges gasförmiges Permeat (P2) in einen der zumindest einen Pervaporationsmembran (22) nachgeordneten sekundärseitigen Raum (26) der Pervaporationseinheit (20) eintritt, und wobei das Wasser des alkoholhaltigen flüssigen Permeats (P1) als Retentat (R2) im primärseitigen Raum (23) der Pervaporationseinheit (20) zurückgehalten und Retentat (R2) der zweiten Membrantrenneinheit (2) als Verdünnungsflüssigkeit (V) für das Retentat (R1) der ersten Membrantrenneinheit (1) wiederverwendet und dazu dem Retentat (R1) der ersten Membrantrenneinheit (1) mittelbar oder unmittelbar zugeführt wird.

## Beschreibung

Die vorliegende Erfindung betrifft ein zweistufiges Membranverfahren zum Entalkoholisieren einer Wasser und Alkohol sowie Aromastoffe und/oder Nährstoffe enthaltenden Ausgangsflüssigkeit gemäß Anspruch 1. Sie betrifft weiterhin eine Vorrichtung zum Entalkoholisieren einer Wasser und Alkohol sowie Aromastoffe und/oder Nährstoffe enthaltenden Ausgangsflüssigkeit nach Anspruch 7, die insbesondere zur Durchführung des erfindungsgemäßen Verfahrens ausgebildet ist.

Zur Entalkoholisierung von alkoholischen Getränken werden häufig Membrantrennverfahren wie beispielsweise die Umkehrosmose oder die Nanofiltration eingesetzt. Membrantrennverfahren wie die Umkehrosmose und die Nanofiltration arbeiten bei niedrigen Temperaturen, sodass der Energieverbrauch relativ gering ist. Ein Nachteil dieser Membranverfahren ist der hohe Wasserverbrauch, der aus der Selektivität der eingesetzten Membranen resultiert. Wasser permeiert ähnlich spezifisch wie Ethanol, sodass im Permeat ein vergleichbares Verhältnis von Wasser zu Ethanol besteht, wie in der zu entalkoholisierenden Ausgangsflüssigkeit. Das der Ausgangsflüssigkeit durch Permeation entzogene Wasservolumen muss durch die Zugabe von produktfremdem entgasten Wasser zum verbleibenden Retentat ausgeglichen werden. Der Bedarf an entgastem Wasser beträgt etwa das Eineinhalbfache bis zum Dreifachen des finalen Produktes. Dieser Vorgang wird auch als Diafiltration bezeichnet. Nachteilig bei diesem bekannten Verfahren ist zudem, dass dem Retentat und damit auch dem Endprodukt Aromastoffe verloren gehen. Ein weiterer Nachteil der bekannten Membrantrennverfahren zur Entalkoholisierung von alkoholhaltigen Getränken, wie etwa der Umkehrosmose und der Nanofiltration, besteht darin, dass diese Verfahren nicht zur Entalkoholisierung von Wein eingesetzt werden können, da aus rechtlichen Gründen kein produktfremdes Wasser dem Wein zugeführt werden darf.

Es sind weiterhin Membrantrennverfahren bekannt, die nach dem Prinzip der Pervaporation arbeiten, wobei die durch die Membran hindurchdiffundierende Komponente der Ausgangsflüssigkeit auf der Sekundärseite der Membran verdampft. Diese Pervaporationsverfahren haben zwar gegenüber Ethanol aufgrund des unterschiedlichen Dampfdruckes eine erhöhte Selektivität als Wasser, weshalb der Wasserverbrauch geringer ausfällt, allerdings weisen sie den Nachteil auf, dass die Verarbeitung feststoffhaltiger, beispielsweise eiweißhaltiger, Flüssigkeiten, wie etwa Bier, zu Membranfouling führt, ähnlich wie dies bei Umkehrosmoseverfahren mittels Wickelmodulmembranen bekannt ist. Dies hat einen Leistungsabfall, kürzere Standzeiten und erhöhten Reinigungsaufwand zur Folge.

Die EP 3 889 245 A1 zeigt und beschreibt ein System und ein Verfahren zur simultanen Herstellung von alkoholfreiem Wein und hochalkoholischem Schnaps. Die dazu verwendete Vorrichtung weist zwei Gruppen von jeweils parallelgeschalteten Membrantrenneinrichtungen auf, wobei die beiden Gruppen in Serie geschaltet sind. Alle Membrantrenneinrichtungen weisen Pervaporationsmembranen auf. Die Membrantrenneinrichtungen der ersten Gruppe sind primärseitig in einen ersten Retentatkreislauf eingebunden, der einen Vorratstank für den zu entalkoholisierenden Wein aufweist. Sekundärseitig sind sie in einen Permeatkreislauf eingebunden , der einen Permeattank aufweist und die Primärseite der Membrantrenneinrichtungen der zweiten Gruppe einbindet, deren Sekundärseite zu einem Tank für den Schnaps führt. Der zu entalkoholisierende Wein fließt in einem ersten Kreislauf aus dem Vorratstank durch die Primärseiten der Membrantrenneinrichtungen der ersten Gruppe, wo Alkohol und in geringem Maße auch Wasser durch die jeweilige Pervaporationsmembran hindurch zur Sekundärseite diffundiert und dort als Permeat in einem Kühler in die flüssige Phase gebracht wird. Das Retentat wird zurück in den Vorratstank geleitet. Mittels einer Pumpe wird das Permeat in einem Permeatkreislauf durch die Primärseiten der Membrantrenneinrichtungen der zweiten Gruppe geleitet, wo Alkohol durch deren jeweilige Pervaporationsmembran hindurchtritt und nach Durchlauf durch einen weiteren Kühler in den Tank für den Schnaps fließt. Durch den Kreislaufbetrieb im ersten Kreislauf wird der Alkoholgehalt im Wein immer stärker abgereichert. Durch den Permeatkreislauf wird der Alkoholgehalt des aus den Membrantrenneinrichtungen der zweiten Gruppe austretenden Schnapses zunehmend angereichert.

Die WO 91/14497 A1 zeigt und beschreibt ein Verfahren und eine Vorrichtung zum selektiven Entfernen von flüchtigen Stoffen aus Flüssigkeiten mit einer ersten Verfahrensstufe, die eine erste Membrantrenneinrichtung aufweist, welche nach dem Verfahren der Umkehrosmose oder alternativ der Dialyse oder der Mikro- oder Ultrafiltration arbeitet und in der der Flüssigkeitsverlust im Retentat durch Hinzufügen von Wasser ausgeglichen wird. Der ersten Verfahrensstufe ist für das Permeat ein Kreislauf mit einer zweiten Membrantrenneinrichtung nachgeschaltet, welche nach dem Verfahren der Pervaporation arbeitet. Die Primärseite der ersten Membrantrenneinrichtung wird von der zu entalkoholisierenden Flüssigkeit durchströmt. Die Sekundärseite der ersten Membrantrenneinrichtung ist in einen Permeatkreislauf eingebunden, der auch die Primärseite der Pervaprationseinrichtung einbindet. Aus der Sekundärseite der Pervaporationseinrichtiung wird der durch die Pervaporationsmembran diffundierte Alkoholdampf in einem Kondensator kondensiert.

Die steigende Nachfrage an alkoholfreien Getränken und die wachsenden Anforderungen bei der Herstellung dieser Produkte in Bezug auf Energie- und Ressourcenverbrauch erfordern die Weiterentwicklung bestehender Entalkoholisierungsverfahren und dafür geeignete Vorrichtungen.

Aufgabe der vorliegenden Erfindung ist es, ein Verfahren zum Entalkoholisieren einer Wasser und Alkohol enthaltenden Ausgangsflüssigkeit anzugeben, bei dem sowohl der Wasserverbrauch als auch der Aromenverlust, also der Verlust von Aromastoffen, reduziert ist. Zudem ist eine insbesondere dafür geeignete Vorrichtung zum Entalkoholisieren anzugeben.

Der auf das Verfahren gerichtete Teil der Aufgabe wird gelöst durch ein Verfahren mit den Merkmalen des Anspruchs 1.

Ein zweistufiges Membrantrennverfahren zum Entalkoholisieren einer Wasser und Alkohol, insbesondere Ethanol, sowie Aromastoffe und/oder Nährstoffe enthaltenden Ausgangsflüssigkeit weist eine erste Verfahrensstufe mit einer zumindest eine Trennmembran aufweisenden ersten Membrantrenneinheit und mit einer der ersten Verfahrensstufe nachgeordneten zweiten Verfahrensstufe mit einer eine Pervaporationseinheit mit zumindest einer Pervaporationsmembran aufweisenden zweiten Membrantrenneinheit auf. Dieses zweistufige Membrantrennverfahren zeichnet sich dadurch aus, dass die Ausgangsflüssigkeit unter Überdruck in einen primärseitigen Raum der ersten Membrantrenneinheit eingeleitet wird, in deren der zumindest einen Trennmembran nachgeordneten sekundärseitigem Raum ein niedrigerer Druck vorherrscht als im primärseitigen Raum, wobei Wasser und Alkohol als ein alkoholhaltiges flüssiges Permeat durch die zumindest eine Trennmembran in den sekundärseitigen Raum hindurchtreten und wobei einem von der zumindest einen Trennmembran im primärseitigen Raum zurückgehaltenen Retentat Wasser oder eine Wasser enthaltende Flüssigkeit als Verdünnungsflüssigkeit mittelbar oder unmittelbar hinzugeführt wird, dass das alkoholhaltige flüssige Permeat in der Pervaporationseinheit der zweiten Membrantrenneinheit nachbehandelt wird, wobei das alkoholhaltige flüssige Permeat zunächst in den primärseitigen Raum der Pervaporationseinheit eingeleitet wird, wo der Alkohol an zumindest einer Pervaporationsmembran verdampft und als alkoholhaltiges gasförmiges Permeat in einen der zumindest einen Pervaporationsmembran nachgeordneten sekundärseitigen Raum der Pervaporationseinheit eintritt, und wobei das Aromen enthaltende Wasser des alkoholhaltigen flüssigen Permeats als Retentat im primärseitigen Raum der Pervaporationseinheit zurückgehalten und Retentat der zweiten Membrantrenneinheit als Verdünnungsflüssigkeit für das Retentat der ersten Membrantrenneinheit wiederverwendet und dazu dem Retentat der ersten Membrantrenneinheit mittelbar oder unmittelbar zugeführt wird. Anstelle einer einzigen Pervaporationseinheit können auch mehrere seriell angeordnete Pervaporationseinheiten vorgesehen sein.

Durch die mittelbare oder unmittelbare Rückführung des im primärseitigen Raum der Pervaporationseinheit, also in der zweiten Verfahrensstufe, zurückgehaltenen Wassers als Verdünnungsflüssigkeit in das Retentat der ersten Membrantrenneinheit und dessen auf diese Weise erfolgenden Wiedereinsatzes in der ersten Verfahrensstufe der Flüssig-Flüssig-Trennung wird als Verdünnungsflüssigkeit für das in der ersten Verfahrensstufe zu verdünnende Retentat produkteigenes Wasser verwendet und es muss kein produktfremdes Wasser hinzugefügt werden. Dadurch wird nicht nur der Wasserverbrauch reduziert, sondern der Einsatzbereich des erfindungsgemäßen Entalkoholisierungsverfahrens wird auch auf die Entalkoholisierung von Wein erstreckt. Durch dieses erfindungsgemäße zweistufige Membran-Entalkoholisierungsverfahren werden sowohl der Aromenverlust als auch der Wasserverbrauch bei der Entalkoholisierung deutlich reduziert.

Weitere bevorzugte und vorteilhafte Ausgestaltungsmerkmale des erfindungsgemäßen Verfahrens sind Gegenstand der Unteransprüche 2 bis 7.

Vorteilhaft ist es, wenn das alkoholhaltige gasförmige Permeat aus dem sekundärseitigen Raum der Pervaporationseinheit einer Kondensationseinheit zugeführt wird, in der im gasförmigen Permeat noch enthaltenes Wasser auskondensiert wird und aus dem verbleibender gasförmiger Alkohol abgeführt werden kann. Aus diesem prozesseigenen Dampf kann durch eine weitere Kondensationseinrichtung Prozesswasser zurückgewonnen werden.

Dabei ist es von besonderem Vorteil, wenn in der Kondensationseinheit auskondensierte Kondensationsflüssigkeit, also im wesentlichen Wasser, in den primärseitigen Raum der Pervaporationseinheit zurückgeführt wird. Vorzugsweise ist dafür ein Puffertank für das alkoholhaltige Permeat aus der ersten Verfahrensstufe vorgesehen, der in den Kreislauf der zweiten Verfahrensstufe eingebunden ist. Enthält diese Kondensationsflüssigkeit noch Alkohol, so wird durch diesen Kreislauf im Batchbetrieb auch dieser Restalkohol noch abgetrennt.

Die in der Kondensationseinheit auskondensierte Kondensationsflüssigkeit, also im wesentlichen Wasser, kann vorzugsweise ebenfalls als Verdünnungsflüssigkeit dem Retentat der ersten Membrantrenneinheit oder der in die erste Membrantrenneinheit eingeleiteten alkoholhaltigen Ausgangsflüssigkeit wieder zugeführt werden. Dies ist insbesondere dann von Vorteil, wenn der Alkohol im Batchbetrieb der zweiten Verfahrensstufe, also der Pervaporationseinheit und der Kondensationseinheit, nahezu vollständig abgetrennt worden ist. Dadurch wird das Retentat der ersten Verfahrensstufe mit diesem zusätzlich rückgewonnenen und alkoholfreien prozesseigenen Wasser verdünnt. Wird die auskondensierte Kondensationsflüssigkeit dem Retentat der ersten Membrantrenneinheit zugeführt, wird weiter vorzugsweise das alkoholfreie, die Aromen enthaltene Kondensat am Ende der jeweils als Batch ausgeführt Prozesse zur weiteren Verwendung aus der Vorrichtung abgeführt und mit dem entalkoholisierten ersten Retentat zu einer alkoholfreien Getränkeflüssigkeit vermischt.

Gemäß einer vorteilhaften Weiterbildung des erfindungsgemäßen Verfahrens, die mit anderen Ausführungsformen der Erfindung kombinierbar ist, wird die in den primärseitigen Raum der ersten Membrantrenneinheit eingeleitete Ausgangsflüssigkeit umgewälzt und dabei im Kreislauf mehrmals durch den primärseitigen Raum und über die Trennmembran der ersten Membrantrenneinheit geleitet. Vorzugsweise ist dafür in der ersten Verfahrensstufe ein Puffertank für die alkoholhaltige Ausgangsflüssigkeit vorgesehen, der in den Kreislauf eingebunden ist. Dieser Batchbetrieb erhöht den Wirkungsgrad der Alkoholabscheidung in der ersten Verfahrensstufe.

Gemäß einer weiteren vorteilhaften Weiterbildung des erfindungsgemäßen Verfahrens, die mit anderen Ausführungsformen der Erfindung kombinierbar ist, wird das in den primärseitigen Raum der Pervaporationseinheit eingeleitete alkoholhaltige flüssige Permeat umgewälzt und dabei im Kreislauf mehrmals durch den primärseitigen Raum und über die Pervaporationsmembran der Pervaporationseinheit geleitet. Dieser Batchbetrieb erhöht den Wirkungsgrad der Alkoholabscheidung in der zweiten Verfahrensstufe.

Besonders von Vorteil ist bei dem erfindungsgemäßen Verfahren, dass in der ersten Verfahrensstufe mittels der ersten Membrantrenneinheit eine flüssig-flüssig-Trennung erfolgt und in der zweiten Verfahrensstufe mittels der zweiten Membrantrenneinheit eine flüssig-gasförmig-Trennung erfolgt.

Das erfindungsgemäße Entalkoholisierungsverfahren kombiniert als erste Verfahrensstufe ein erstes Flüssig-Flüssig-Membrantrennverfahren, zum Beispiel der Diafiltration, mit einem in Strömungsrichtung diesem nachgeordneten zweiten Flüssig-Gasförmig-Membrantrennverfahren der Pervaporation als zweite Verfahrensstufe. Das zweite Membrantrennverfahren der Pervaporation ist geeignet, die produkteigenen wertvollen Inhaltsstoffe Wasser und Aromen aus dem Permeat des ersten Membrantrennverfahrens zurückzugewinnen. Dieses aromenhaltige Wasser kann in die erste Verfahrensstufe zurückgeführt werden und dort zur Verdünnung des Retentats des ersten Membrantrennverfahrens dienen, wodurch auch die Aromen wieder in dieses Retentat zurückgeführt werden. Ist dieses Retentat, beispielsweise nach Durchführung des Batchbetriebs, entalkoholisiert, so enthält es wieder jene Aromen, die im ersten Membrantrennverfahren, während der Aufkonzentrierung und beispielsweise der Diafiltration, der Ausgangsflüssigkeit entzogen worden sind. Die zweite Verfahrensstufe dient also nicht nur zur Rückgewinnung des Prozesswassers, sondern auch zur Rückgewinnung der in der ersten Verfahrensstufe, also im ersten Membrantrennverfahren, abgeführten Aromen.

Für den wirtschaftlichen Betrieb einer das erfindungsgemäße Verfahren durchführenden Entalkoholisierungsvorrichtung ist es von Vorteil, wenn der Alkoholgehalt des Retentats der Pervaporation in der zweiten Verfahrensstufe, also der zur ersten Verfahrensstufe des ersten Membrantrennverfahrens, zum Beispiel der Diafiltration oder der Umkehrosmose, zurückgeführten Flüssigkeit, einen niedrigen Alkoholgehalt von vorzugsweise weniger als 1,5 vol.%, weiter vorzugsweise weniger als 1,0 vol.%, weiter vorzugsweise weniger als 0,5 vol.%, weiter vorzugsweise weniger als 0,05 vol.% aufweist.

Das Permeat der ersten Verfahrensstufe weist eine niedrige Viskosität auf, enthält keine Feststoffe und einen geringen lonenanteil. Diese Eigenschaften machen es zu einem sehr gut geeigneten Ausgangsprodukt für den Ethanolentzug mittels der Pervaporation in der zweiten Verfahrensstufe, da es keine Foulingneigung aufweist. Somit ist die erfindungsgemäße Kombination beider Membrantrennverfahren effizienter als eine direkte Entalkoholisierung nur mittels Pervaporation.

Der auf die Vorrichtung gerichtete Teil der Aufgabe wird gelöst durch eine insbesondere zur Durchführung eines erfindungsgemäßen Verfahrens ausgebildeten Vorrichtung mit den Merkmalen des Anspruchs 8.

Eine Vorrichtung zum Entalkoholisieren einer Wasser und Alkohol, insbesondere Ethanol, sowie Aromastoffe und/oder Nährstoffe enthaltenden Ausgangsflüssigkeit ist versehen mit einer eine ersten Stofftrennstufe bildenden ersten Membrantrenneinheit und mit einer der ersten Stofftrennstufe in Prozessrichtung nachgeordneten, eine zweite Stofftrennstufe bildenden zweiten Membrantrenneinheit, die als Pervaporationseinheit ausgebildet ist oder eine Pervaporationseinheit aufweist, wobei ein Permeat-Austritt der ersten Stofftrennstufe mit einem Flüssigkeitseintritt der zweiten Stofftrennstufe mittelbar oder unmittelbar in Fluidverbindung steht oder bringbar ist. Diese Vorrichtung zeichnet sich dadurch aus, dass eine mittelbare oder unmittelbare Rückführung des Retentats der Pervaporationseinheit als Verdünnungsflüssigkeit in das Retentat der ersten Membrantrenneinheit vorgesehen ist. Eine derartige zweistufige Entalkoholisierungsvorrichtung kombiniert die Vorteile der ersten Membrantrenneinheit in der ersten Flüssig-Flüssig-Stofftrennstufe mit den Vorteilen der zweiten Membrantrenneinheit zur Pervaporation in der zweiten Flüssig-Gasförmig-Stofftrennstufe ohne deren jeweiligen Nachteile in Kauf nehmen zu müssen und ermöglicht zudem die Rückgewinnung von Aromen und Prozesswasser.

Weitere bevorzugte und vorteilhafte Ausgestaltungsmerkmale der erfindungsgemäßen Vorrichtung sind Gegenstand der Unteransprüche 9 bis 13.

Besonders von Vorteil ist es, wenn in der zweiten Stofftrennstufe der Pervaporationseinheit in Prozessrichtung eine Kondensationseinheit nachgeordnet ist, wobei ein Permeat-Austritt der zweiten Stofftrennstufe mit einem Fluideintritt der Kondensationseinheit mittelbar oder unmittelbar in Fluidverbindung steht oder bringbar ist. Hierdurch wird die Rückgewinnung von Aromen und Prozesswasser verbessert.

Dabei ist es vorteilhaft, wenn ein Kondensationsflüssigkeitsaustritt der Kondensationseinheit mit dem den primärseitigen Raum der Pervaporationseinheit oder mit einem Verdünnungsflüssigkeitseinlass der ersten Stofftrennstufe in Fluidverbindung steht oder bringbar ist.

Vorzugsweise sind in der zweiten Membrantrenneinheit mehrere seriell angeordnete Pervaporationseinheiten vorgesehen.

Besonders von Vorteil ist es, wenn die erste Membrantrenneinheit zur Durchführung eines flüssig-flüssig-Membrantrennverfahrens ausgebildet ist.

Dabei ist es weiter vorteilhaft, wenn die erste Membrantrenneinheit als Diafiltrationseinheit oder Umkehrosmoseeinheit, ausgebildet ist oder eine Diafiltrationseinheit oder Umkehrosmoseeinheit aufweist.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

Es zeigt:

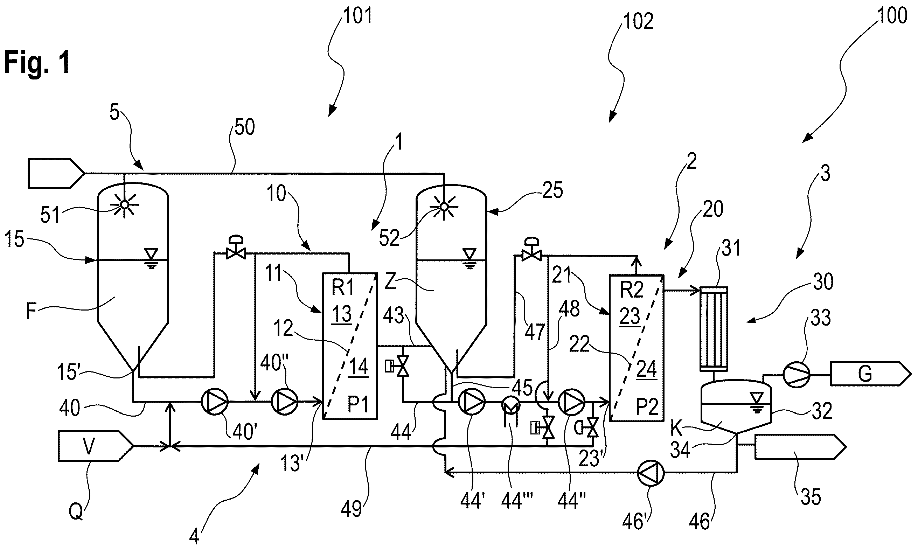

- Fig. 1: ein Verfahrensschema einer das erfindungsgemäße Verfahren durchführenden Vorrichtung zur Entalkoholisierung.

In Fig. 1 ist eine Vorrichtung 100 zum Entalkoholisieren einer Wasser und Alkohol enthaltenden Flüssigkeit, beispielsweise einer Getränkeflüssigkeit wie Bier oder Wein, schematisch dargestellt. Mit dieser Vorrichtung 100 wird ein Verfahren zum Entalkoholisieren dieser Flüssigkeit durchgeführt, wobei die Prozessrichtung P von links nach rechts verläuft. Das heißt, die einzelnen Verfahrensschritte werden in der Vorrichtung von links nach rechts in Fig. 1 durchlaufen.

Die Vorrichtung 100 arbeitet nach dem Prinzip der Stofftrennung mittels permeabler Membranen 12, 22 und wendet konsekutiv zwei unterschiedliche Membrantrennverfahren an, ist also zweistufig aufgebaut. Eine erste Stofftrennstufe 101 wird von einer ersten Membrantrenneinheit 1 gebildet und eine der ersten Stofftrennstufe 101 in Prozessrichtung P nachgeordnete zweite Membrantrenneinheit 2 ist Bestandteil einer zweiten Stofftrennstufe 102.

Die erste Membrantrenneinheit 1 der ersten Stofftrennstufe 101 arbeitet im gezeigten Beispiel nach dem Prinzip der Diafiltration, beispielsweise der Mikrofiltration, der Ultrafiltration oder der Nanofiltration. Sie kann aber beispielsweise auch nach dem Prinzip der Umkehrosmose oder einem anderen Membrantrennverfahren arbeiten, bei dem eine Flüssigkeit durch eine Membran diffundiert.

Die erste Membrantrenneinheit 1 weist im gezeigten Beispiel eine Diafiltrationseinheit 10 auf oder ist als Diafiltrationseinheit ausgebildet. Die Diafiltrationseinheit 10 weist ein Filtergehäuse 11 auf, in dem eine Trennmembran 12 angeordnet ist, die den Innenraum des Filtergehäuses 11 in einen primärseitigen Raum 13 und einen sekundärseitigen Raum 14 trennt.

Die zweite Membrantrenneinheit 2 der zweiten Stofftrennstufe 102 arbeitet nach dem Prinzip der Pervaporation und weist eine Pervaporationseinheit 20 auf. Die Pervaporationseinheit 20 weist ein Filtergehäuse 21 auf, in dem eine Pervaporationsmembran 22 angeordnet ist, die den Innenraum des Filtergehäuses 21 in einen primärseitigen Raum 23 und einen sekundärseitigen Raum 24 trennt. Ebenfalls zur zweiten Stofftrennstufe 102 gehört eine der Pervaporationseinheit 20 in Prozessrichtung nachgeordnete Kondensationseinrichtung 3 mit einer Kondensationseinheit 30, die einen Kondensator 31 und einen Kondensatsammeltank 32 mit einem Kondensationsflüssigkeitsaustritt 34 aufweist.

Ein der ersten Membrantrenneinheit 1 zugeordneter erster Puffertank 15 dient der Aufnahme von zu behandelnder, Wasser und Alkohol enthaltender Ausgangsflüssigkeit F, beispielsweise einer alkoholhaltigen Getränkeflüssigkeit. Ein der zweiten Membrantrenneinheit 2 zugeordneter zweiter Puffertank 25 dient der Aufnahme von ein erstes Permeat P1 der ersten Membrantrenneinheit 1 enthaltender Zwischenprodukt-Flüssigkeit Z.

Die einzelnen Komponenten der Vorrichtung 100 sind über Fluidleitungen eines Fluidleitungssystems 4 miteinander verbunden. Fig. 1 zeigt zudem eine mit einem CIP-Reinigungsfluid beschickbare CIP-Reinigungseinheit 5 für die Puffertanks 15, 25 mit einer Versorgungsleitung 50 und in den Puffertanks 15, 25 vorgesehenen Sprühköpfen 51, 52, die allerdings nicht erfindungswesentlich ist.

Ein Flüssigkeitsauslass 15' des ersten Puffertanks 15 steht über eine erste Zuleitung 40 des Fluidleitungssystems 4 mit einem Flüssigkeitseinlass 13' des primärseitigen Raums 13 der Diafiltrationseinheit 10 in Fluidverbindung. In der ersten Zuleitung 40 sind eine Druckerhöhungspumpe 40' und eine Umwälzpumpe 40" vorgesehen.

Ausgangsflüssigkeit F wird aus dem ersten Puffertank 15 durch die erste Zuleitung 40 unter Überdruck in den primärseitigen Raum 13 der Diafiltrationseinheit 10 eingeleitet. Ein Teil dieser Flüssigkeit, nämlich Alkohol und Wasser mit darin gelösten Aromen, werden aus dem primärseitigen Raum 13 durch die Trennmembran 12 in den sekundärseitigen Raum 14 gedrückt und bilden dort ein erstes Permeat P1. Die im primärseitigen Raum 13 verbleibende Flüssigkeit bildet ein erstes Retentat R1, das entweder durch eine erste Rückführleitung 41 in den ersten Puffertank 15 zurückgeführt wird oder mittels der Umwälzpumpe 40" durch eine Umwälzleitung 42 im Kreislaufbetrieb zum Flüssigkeitseinlass 13' des primärseitigen Raums 13 geleitet wird. In diesem Kreislaufbetrieb wird nicht nur der noch im Retentat enthaltene Alkoholanteil abgereichert und durch den Wasserverlust zugleich die Viskosität des Retentats erhöht. Durch den Wasserverlust wird außerdem der Aromenanteil im ersten Retentat R1 abgereichert. Um das erste Retentat R1 nicht zu dickflüssig werden zu lassen, wird Wasser oder eine Wasser enthaltende Verdünnungsflüssigkeit V aus einer externen Quelle Q oder - wie es weiter unten beschrieben ist - als Rücklauf aus der zweiten Membrantrenneinheit 2 durch eine Rückführleitung 49 in die erste Zuleitung 40 zur Verdünnung des ersten Retentats R1 eingeleitet.

Das die Diafiltrationseinheit 10 verlassende erste Permeat P1 wird entweder durch eine erste Transferleitung 43 in den zweiten Puffertank 25 oder durch eine zweite Transferleitung 44, in die auch ein Auslass 45 des zweiten Puffertanks 25 mündet, zu einem Flüssigkeitseinlass 23' des primärseitigen Raums 23 der Pervaporationseinheit 20 geleitet und tritt dort in den primärseitigen Raum 23 ein. In der zweiten Transferleitung 44 sind eine Förderpumpe 44', eine Umwälzpumpe 44" und eine Heizeinrichtung 44‴ vorgesehen. Diese Heizeinrichtung 44‴ kann in der ersten Stofftrennstufe 101 entstehende Abwärme nutzen.

Das erste Permeat P1 dringt, erwärmt von der Heizeinrichtung 44"', aus dem primärseitigen Raum 23 der Pervaporationseinheit 20 in die Pervaporationsmembran 22 ein, wobei es in den sekundärseitigen Raum 24 verdampft. Dieser ein zweites Permeat P2 bildende Dampf wird aus dem sekundärseitigen Raum 24 in den Kondensator 31 der Kondensationseinrichtung 3 geleitet, wo das dampfförmige zweite Permeat P2 mit den darin enthaltenden Aromen kondensiert und als kondensierte Flüssigkeit im Kondensatsammeltank 32 aufgefangen wird. Der nicht kondensierte, noch gasförmige Anteil kann in seiner Gasphase G mittels einer Unterdruckpumpe 33 abgeführt werden.

Das im Kondensatsammeltank 32 aufgefangene Kondensat K besteht im Wesentlichen aus dem die Aromen enthaltenden Prozesswasser mit noch geringen Alkoholanteilen. Dieses Kondensat K kann durch einen Kondensatauslass 35 aus der Vorrichtung 100 abgeführt werden oder es wird mittels einer weiteren Förderpumpe 46' durch eine zweite Rückführleitung 46 zurück in den zweiten Puffertank 25 geleitet. Von dort kann es im Kreislauf nochmals durch die Pervaporationseinheit 20 und als zweites Permeat P2 durch die Kondensationseinheit 30 geleitet werden, wobei der Alkoholanteil noch weiter reduziert werden kann.

Der nicht durch die Pervaporationsmembran 22 hindurchtretende Flüssigkeitsanteil des ersten Permeats P1 bleibt als zweites Retentat R2 im primärseitigen Raum 23 der Pervaporationseinheit 20 zurück und wird entweder durch eine dritte Rückführleitung 47 zurück in den zweiten Puffertank 25 geleitet oder fließt durch eine zweite Umwälzleitung 48, angetrieben von der zweiten Umwälzpumpe 44", im Umwälzbetrieb zurück in den primärseitigen Raum 23 der Pervaporationseinheit 20, um so ebenfalls eine weitere Abreicherung des Alkoholgehalts im zweiten Retentat R2 zu erzielen. Durch eine vierte Rückführleitung 49 kann das so abgereicherte zweite Retentat R2, also das im Wesentlichen alkoholfreie Wasser mit den darin enthaltenen Aromen, als Prozesswasser in die erste Zuleitung 40 zurückgeführt werden.

Die in der ersten Stofftrennstufe 101 systembedingt aus der Ausgangsflüssigkeit F mit dem Alkohol und einem Teil des Wassers entfernten Aromen werden in der zweiten Stofftrennstufe 102 wieder zurückgewonnen. Am Ende der jeweils als Batch ausgeführten Prozesse wird das alkoholfreie, die Aromen enthaltene Kondensat K zur weiteren Verwendung aus der Vorrichtung 100 abgeführt und kann mit dem entalkoholisierten ersten Retentat R1 zu einer alkoholfreien Getränkeflüssigkeit vermischt werden.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: erste Membrantrenneinheit
- 2: zweite Membrantrenneinheit
- 3: Kondensationseinrichtung
- 4: Fluidleitungssystem
- 5: CIP-Reinigungseinheit
- 10: Diafiltrationseinheit
- 11: Filtergehäuse
- 12: permeable Trennmembran
- 13: primärseitiger Raum
- 13': Flüssigkeitseinlass
- 14: sekundärseitiger Raum
- 15: erster Puffertank
- 15': Flüssigkeitsauslass
- 20: Pervaporationseinheit
- 21: Filtergehäuse
- 22: Pervaporationsmembran
- 23: primärseitiger Raum
- 23': Flüssigkeitseinlass
- 24: sekundärseitiger Raum
- 25: zweiter Puffertank
- 30: Kondensationseinheit
- 31: Kondensator
- 32: Kondensatsammeltank
- 33: Unterdruckpumpe
- 34: Kondensationsflüssigkeitsaustritt
- 35: Kondensatauslass
- 40: erste Zuleitung
- 40': Druckerhöhungspumpe
- 40": Umwälzpumpe
- 41: erste Rückführleitung
- 42: Umwälzleitung
- 43: erste Transferleitung
- 44: zweite Transferleitung
- 44': Förderpumpe
- 44": zweite Umwälzpumpe
- 44‴: Heizeinrichtung
- 45: Auslass des zweiten Puffertanks 25
- 46: zweite Rückführleitung
- 46': Förderpumpe
- 47: dritte Rückführleitung
- 48: zweite Umwälzleitung
- 49: vierte Rückführleitung
- 50: CIP-Versorgungsleitung
- 51: Sprühkopf
- 52: Sprühkopf
- 100: Vorrichtung zum Entalkoholisieren
- 101: erste Stofftrennstufe
- 102: zweite Stofftrennstufe

- F: Ausgangsflüssigkeit
- G: Gasphase
- K: Kondensat
- P1: erstes Permeat
- P2: zweites Permeat
- R1: erstes Retentat
- R2: zweites Retentat
- V: Verdünnungsflüssigkeit
- Z: Zwischenprodukt-Flüssigkeit

## Patentansprüche

1. Zweistufiges Membrantrennverfahren zum Entalkoholisieren einer Wasser und Alkohol, insbesondere Ethanol, sowie Aromastoffe und/oder Nährstoffe enthaltenden Ausgangsflüssigkeit (F) mit einer ersten Verfahrensstufe mit einer zumindest eine Trennmembran (12) aufweisenden ersten Membrantrenneinheit (1) und mit einer der ersten Verfahrensstufe nachgeordneten zweiten Verfahrensstufe mit einer eine Pervaporationseinheit (20) mit zumindest einer Pervaporationsmembran (22) aufweisenden zweiten Membrantrenneinheit (2) aufweist,
**dadurch gekennzeichnet,**
**dass** die Ausgangsflüssigkeit (F) unter Überdruck in einen primärseitigen Raum (13) der ersten Membrantrenneinheit (1) eingeleitet wird, in deren der zumindest einen Trennmembran (12) nachgeordneten sekundärseitigem Raum (14) ein niedrigerer Druck vorherrscht als im primärseitigen Raum (13), wobei Wasser und Alkohol als ein alkoholhaltiges flüssiges Permeat (P1) durch die zumindest eine Trennmembran (12) in den sekundärseitigen Raum (14) hindurchtreten und wobei einem von der zumindest einen Trennmembran (12) im primärseitigen Raum (13) zurückgehaltenen Retentat (R1) Wasser oder eine Wasser enthaltende Flüssigkeit als Verdünnungsflüssigkeit (V) mittelbar oder unmittelbar hinzugeführt wird,
**dass** das alkoholhaltige flüssige Permeat (P1) in der Pervaporationseinheit (20) der zweiten Membrantrenneinheit (2) nachbehandelt wird, wobei das alkoholhaltige flüssige Permeat (P1) zunächst in den primärseitigen Raum (23) der Pervaporationseinheit (20) eingeleitet wird, wo der Alkohol in zumindest einer Pervaporationsmembran (22) verdampft und als alkoholhaltiges gasförmiges Permeat (P2) in einen der zumindest einen Pervaporationsmembran (22) nachgeordneten sekundärseitigen Raum (26) der Pervaporationseinheit (20) eintritt, und wobei das Wasser des alkoholhaltigen flüssigen Permeats (P1) als Retentat (R2) im primärseitigen Raum (23) der Pervaporationseinheit (20) zurückgehalten und Retentat (R2) der zweiten Membrantrenneinheit (2) als Verdünnungsflüssigkeit (V) für das Retentat (R1) der ersten Membrantrenneinheit (1) wiederverwendet und dazu dem Retentat (R1) der ersten Membrantrenneinheit (1) mittelbar oder unmittelbar zugeführt wird.

2. Verfahren nach Anspruch 1,
**dadurch gekennzeichnet,**
**dass** das alkoholhaltige gasförmige Permeat (P2) aus dem sekundärseitigen Raum (26) der Pervaporationseinheit (20) einer Kondensationseinheit (30) zugeführt wird, in der im gasförmigen Permeat (P2) noch enthaltenes Wasser auskondensiert wird und aus dem der verbleibende gasförmige Alkohol abgeführt werden kann.

3. Verfahren nach Anspruch 2,
**dadurch gekennzeichnet,**
**dass** in der Kondensationseinheit (30) auskondensierte Kondensationsflüssigkeit (K) in den primärseitigen Raum (23) der Pervaporationseinheit (20) zurückgeführt wird.

4. Verfahren nach Anspruch 2,
**dadurch gekennzeichnet,**
**dass** in der Kondensationseinheit (30) auskondensierte Kondensationsflüssigkeit (K) als Verdünnungsflüssigkeit (V) der in die erste Membrantrenneinheit (1) eingeleiteten alkoholhaltigen Ausgangsflüssigkeit (F) oder dem Retentat (R1) der ersten Membrantrenneinheit (1) zugeführt wird, wobei vorzugsweise das alkoholfreie, die Aromen enthaltene Kondensat (K) am Ende der jeweils als Batch ausgeführt Prozesse zur weiteren Verwendung aus der Vorrichtung (100) abgeführt und mit dem entalkoholisierten ersten Retentat (R1) zu einer alkoholfreien Getränkeflüssigkeit vermischt wird.

5. Verfahren nach einem der vorhergehenden Ansprüche,
**dadurch gekennzeichnet,**
**dass** die in den primärseitigen Raum (13) der ersten Membrantrenneinheit (1) eingeleitete Ausgangsflüssigkeit (F) umgewälzt und dabei im Kreislauf mehrmals durch den primärseitigen Raum (13) und über die Trennmembran (12) der ersten Membrantrenneinheit (1) geleitet wird.

6. Verfahren nach einem der vorhergehenden Ansprüche,
**dadurch gekennzeichnet,**
**dass** das in den primärseitigen Raum (23) der Pervaporationseinheit (20) eingeleitete alkoholhaltige flüssige Permeat (P1) umgewälzt und dabei im Kreislauf mehrmals durch den primärseitigen Raum (23) und über die Pervaporationsmembran (22) der Pervaporationseinheit (20) geleitet wird.

7. Verfahren nach einem der vorhergehenden Ansprüche,
**dadurch gekennzeichnet,**
**dass** in der ersten Verfahrensstufe mittels der ersten Membrantrenneinheit (1) eine flüssig-flüssig-Trennung erfolgt und
**dass** in der zweiten Verfahrensstufe mittels der zweiten Membrantrenneinheit (2) eine flüssig-gasförmig-Trennung erfolgt.

8. Vorrichtung zum Entalkoholisieren einer Wasser und Alkohol, insbesondere Ethanol, sowie Aromastoffe und/oder Nährstoffe enthaltenden Ausgangsflüssigkeit (F), insbesondere nach einem Verfahren gemäß einem der vorhergehenden Ansprüche, mit einer eine erste Stofftrennstufe (101) bildenden ersten Membrantrenneinheit (1) und mit einer der ersten Stofftrennstufe (101) in Prozessrichtung nachgeordneten, eine zweite Stofftrennstufe (102) bildenden zweite Membrantrenneinheit (2), die als Pervaporationseinheit (20) ausgebildet ist oder eine Pervaporationseinheit (20) aufweist, wobei ein Permeat-Austritt (14') der ersten Stofftrennstufe (101) mit einem Flüssigkeitseintritt (23') der zweiten Stofftrennstufe (102) mittelbar oder unmittelbar in Fluidverbindung steht oder bringbar ist,
**dadurch gekennzeichnet,**
**dass** eine mittelbare oder unmittelbare Rückführung des Retentats (R2) der Pervaporationseinheit (20) als Verdünnungsflüssigkeit (V) in das Retentat (R1) der ersten Membrantrenneinheit (1) vorgesehen ist.

9. Vorrichtung nach Anspruch 8,
**dadurch gekennzeichnet,**
**dass** in der zweiten Stofftrennstufe (102) der Pervaporationseinheit (20) in Prozessrichtung eine Kondensationseinheit (30) nachgeordnet ist, wobei ein Permeat-Austritt (26') der zweiten Stofftrennstufe (20) mit einem Fluideintritt (31) der Kondensationseinheit (30) mittelbar oder unmittelbar in Fluidverbindung steht oder bringbar ist.

10. Vorrichtung nach Anspruch 9,
**dadurch gekennzeichnet,**
**dass** ein Kondensationsflüssigkeitsaustritt (34) der Kondensationseinheit (30) mit dem den primärseitigen Raum (23) der Pervaporationseinheit (20) oder mit einem Verdünnungsflüssigkeitseinlass (27) der ersten Stofftrennstufe (101) in Fluidverbindung steht oder bringbar ist.

11. Vorrichtung nach einem der Ansprüche 8 bis 10,
**dadurch gekennzeichnet,**
**dass** in der zweiten Membrantrenneinheit (2) mehrere seriell angeordnete Pervaporationseinheiten (20) vorgesehen sind.

12. Vorrichtung nach einem der Ansprüche 8 bis 11,
**dadurch gekennzeichnet,**
**dass** die erste Membrantrenneinheit (1) zur Durchführung eines flüssig-flüssig-Membrantrennverfahrens ausgebildet ist

13. Vorrichtung nach Anspruch 12,
**dadurch gekennzeichnet,**
**dass** die erste Membrantrenneinheit (1) als Diafiltrationseinheit (10) oder Umkehrosmoseeinheit, ausgebildet ist oder eine Diafiltrationseinheit (10) oder Umkehrosmoseeinheit aufweist.
